# EUROPEAN PATENT APPLICATION

(11) **EP 4 273 685 A1**
(43) Date of publication of application: **08.11.2023**
(21) Application number: 23171048.4
(22) Date of filing: 02.05.2023
(51) Int. Cl.: G06F 3/0484, G06F 3/0488, H04L 65/401

(54) **ELECTRONIC WHITEBOARD SYSTEM AND OPERATION METHOD THEREOF**

(30) Priority: 05.05.2022 US 202263338457 P; 20.07.2022 CN 202210855916
(71) Applicant: Optoma Coporation, New Taipei City 231633 (TW)
(72) Inventor: WANG, Wen-Tai, New Taipei City 231633 (TW); CHEN, Ron-Fu, New Taipei City 231633 (TW); HO, Cheng-Kang, New Taipei City 231633 (TW)
(74) Representative: Ter Meer Steinmeister & Partner

(57) **Abstract**

An electronic whiteboard system includes a data processing equipment receiving a plurality of first editing information provided by at least a portion of a plurality of client-end equipment, sorting and grouping the plurality of first editing information to select and sort from the plurality of first editing information as a plurality of pre-processing information, calculating a plurality of priority scores of the plurality of pre-processing information, sorting the plurality of pre-processing information according to the plurality of priority scores, verifying whether the plurality of pre-processing information sorted according to the priority scores are permitted to select at least one of the plurality of pre-processing information verified as permitted to generate second editing information, and executing the second editing information, so that the plurality of client-end equipment display editing results of a cloud electronic whiteboard corresponding to the second editing information. An operation method thereof is also provided.

## Description

This application claims the priority benefit of U.S. provisional applications serial no. 62/954,675, filed on December 30, 2019 and China application serial no. 202011000182.42, filed on September 22, 2020.

### BACKGROUND OF THE INVENTION

### Field of the Invention

The invention relates to a multi-person collaboration system, and in particular, to an electronic whiteboard system and an operation method thereof.

### Description of Related Art

In a traditional electronic whiteboard, an electronic whiteboard file is added by a first client, and the storage path of this newly added electronic whiteboard file may be selected (can be stored in a cloud or in a local operating computer). In addition to the default single page of the electronic whiteboard in the prior art, a user may edit the content of the electronic whiteboard by adding or deleting a page, and may add/modify/delete an object in each page (the object includes handwriting or an inserted picture). However, the issue that often occurs in the system is that different clients may perform different operations and edits on the same object. For example, the first client may operate the function of "deleting a page of the electronic whiteboard", but a second client may edit the object in this page at the same time. Alternatively, a client who does not have editing permission may attempt to edit. Or, the editing operation attempted by the client is an editing operation that is not allowed. As a result, editing errors often occur in the traditional electronic whiteboard system, and even all clients may not display uniform editing results, resulting in the disadvantage of poor client experience.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the invention was acknowledged by a person of ordinary skill in the art.

### SUMMARY OF THE INVENTION

The invention provides an electronic whiteboard system and an operation method thereof that may implement a cloud electronic whiteboard editing function of multi-person collaboration.

Other objects and advantages of the invention may be further understood from the technical features disclosed by the invention.

The object is solved by the features of the independent claims. Preferred embodiments are given in the dependent claims.

To achieve one or part or all of the above objects or other objects, an electronic whiteboard system of the invention includes a data processing equipment. The data processing equipment is coupled to a plurality of client-end equipment, and the plurality of client-end equipment are configured to display a cloud electronic whiteboard. The data processing equipment receives a plurality of first editing information provided by at least a portion of the plurality of client-end equipment, and the data processing equipment sorts and groups the plurality of first editing information to select and sort from the plurality of first editing information as a plurality of pre-processing information. The data processing equipment calculates a plurality of priority scores of the plurality of pre-processing information respectively, and the data processing equipment sorts the plurality of pre-processing information according to the plurality of priority scores. The data processing equipment respectively verifies whether the plurality of pre-processing information sorted according to the plurality of priority scores are permitted to select at least one of the plurality of pre-processing information verified as permitted to generate second editing information, and the data processing equipment executes the second editing information, so that the plurality of client-end equipment display editing results of the cloud electronic whiteboard corresponding to the second editing information.

In one or more embodiments, the data processing equipment may transform a plurality of time parameters of the plurality of first editing information into a plurality of Coordinated Universal Times (UTCs).

In one or more embodiments, the data processing equipment may sort the plurality of first editing information according to the plurality of UTCs and/or may select at least a portion of the sorted plurality of first editing information as the plurality of pre-processing information.

In one or more embodiments, the data processing equipment may select the at least a portion of the sorted plurality of first editing information as the plurality of pre-processing information according to a preset time interval.

In one or more embodiments, the data processing equipment may determine an operation type of the plurality of pre-processing information, and may determine whether the plurality of pre-processing information have an editing permission respectively.

In one or more embodiments, the data processing equipment may sort the plurality of pre-processing information having the editing permission according to the plurality of priority scores.

In one or more embodiments, the data processing equipment may determine whether the plurality of pre-processing information have the editing permission respectively according to an editing permission setting corresponding to an operation situation of the cloud electronic whiteboard.

In one or more embodiments, the data processing equipment may sort the plurality of pre-processing information in sequence in a priority order from a highest priority score to a lowest priority score.

In one or more embodiments, the data processing equipment may look up a table according to an operation situation of the cloud electronic whiteboard, so as to obtain the plurality of priority scores of the plurality of pre-processing information.

In one or more embodiments, the data processing equipment may sequentially process the plurality of pre-processing information according to a priority order, and/or may respectively verify whether the plurality of pre-processing information are permitted according to an operational transformation.

In one or more embodiments, the data processing equipment may record the second editing information.

In one or more embodiments, wherein after the data processing equipment may execute the second editing information.

In one or more embodiments, the data processing equipment may select at least another of the plurality of pre-processing information verified as permitted to generate another second editing information.

In one or more embodiments, the data processing equipment may execute the other second editing information, so that the plurality of client-end equipment display editing results of the cloud electronic whiteboard corresponding to the other second editing information.

In one or more embodiments, an UTC sequence of the second editing information may be earlier than an UTC sequence of the other second editing information.

In another an operation method of an electronic whiteboard system is provided, wherein the electronic whiteboard system displays a cloud electronic whiteboard via a plurality of client-end equipment, and the operation method comprises the following steps: receiving a plurality of first editing information provided by at least a portion of the plurality of client-end equipment; sorting and grouping the plurality of first editing information to select and sort from the plurality of first editing information as a plurality of pre-processing information; calculating a plurality of priority scores of the plurality of pre-processing information respectively, and sorting the plurality of pre-processing information according to the plurality of priority scores; verifying whether the plurality of pre-processing information sorted according to the plurality of priority scores are permitted respectively, so as to select at least one of the plurality of pre-processing information verified as permitted to generate second editing information; and executing the second editing information, so that the plurality of client-end equipment display editing results of the cloud electronic whiteboard corresponding to the second editing information.

In one or more embodiments, the step of sorting and grouping the plurality of first editing information may comprise at least one of the following steps: transforming a plurality of time parameters of the plurality of first editing information into a plurality of UTCs; and sorting the plurality of first editing information according to the plurality of UTCs, and selecting at least a portion of the sorted plurality of first editing information as the plurality of pre-processing information.

In one or more embodiments, the step of selecting the at least a portion of the sorted plurality of first editing information as the plurality of pre-processing information may comprises selecting the at least a portion of the sorted plurality of first editing information as the plurality of pre-processing information according to a preset time interval.

In one or more embodiments, the step of sorting the plurality of pre-processing information according to the plurality of priority scores may comprise at least one or the following steps: determining an operation type of the plurality of pre-processing information; determining whether the plurality of pre-processing information have an editing permission, respectively; and sorting the plurality of pre-processing information having the editing permission according to the plurality of priority scores.

In one or more embodiments, the step of determining whether the plurality of pre-processing information have the editing permission may comprise determining whether the plurality of pre-processing information have the editing permission respectively according to an editing permission setting corresponding to an operation situation of the cloud electronic whiteboard.

In one or more embodiments, the plurality of pre-processing information may be sorted in sequence in a priority order from a highest priority score to a lowest priority score.

In one or more embodiments, the step of calculating the plurality of priority scores of the plurality of pre-processing information respectively may comprise looking up a table according to an operation situation of the cloud electronic whiteboard to obtain the plurality of priority scores of the plurality of pre-processing information.

In one or more embodiments, the step of verifying whether the plurality of pre-processing information are permitted respectively may comprise the following steps: processing the plurality of pre-processing information in sequence according to the priority order; and verifying whether the plurality of pre-processing information are permitted respectively according to an operational transformation.

In one or more embodiments, the operation method may further comprises: recording the second editing information.

In one or more embodiments, after the data processing equipment executes the second editing information, the data processing equipment may select at least another of the plurality of pre-processing information verified as permitted to generate another second editing information, and the data processing equipment may executes the other second editing information, so that the plurality of client-end equipment display editing results of the cloud electronic whiteboard corresponding to the other second editing information, wherein the UTC sequence of the second editing information is earlier than the UTC sequence of the other second editing information.

Based on the above, the electronic whiteboard system and the operation method thereof of the invention may allow the plurality of client-end equipment to perform the editing function of the cloud electronic whiteboard at the same time. For different editing operations performed by different client-end equipment on the same object, the electronic whiteboard system of the invention may perform effective collaborative processing and editing management to implement effective and multi-person collaborative cloud whiteboard editing function with good client experience.

To make the above features and advantages of the invention better understood, embodiments are specifically provided below with reference to figures for detailed description as follows.

### BRIEF DESCRIPTION OF THE DRAWINGS

FIG. 1 is a schematic diagram of information transmission of an electronic whiteboard system of an embodiment of the invention.
FIG. 2 flowchart of an operation method of an electronic whiteboard system of an inventive embodiment.
FIG. 3 flowchart of sorting a plurality of 1^{st} editing information of an inventive embodiment.
FIG. 4 is a flowchart of calculating a plurality of priority scores of a plurality of pre-processing information of an embodiment of the invention.
FIG. 5 flowchart of generating a plurality of 2^{nd} editing information of an inventive embodiment.

### DESCRIPTION OF THE EMBODIMENTS

The foregoing and other technical contents, features, and effects of the invention will be clearly presented in the following detailed description of a preferred embodiment with accompanying drawings.

In order to make the content of the invention more comprehensible, the following specific embodiments are taken as examples in which the invention may indeed be implemented. In addition, wherever possible, elements/members/steps with the same reference numerals are used in the drawings and specific implementations to represent the same or similar components.

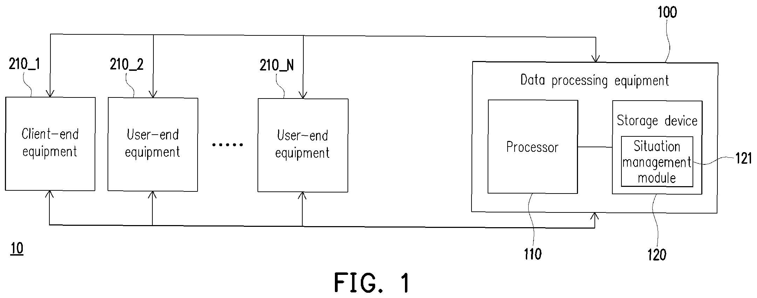

FIG. 1 is a schematic diagram of information transmission of an electronic whiteboard system of an embodiment of the invention. Referring to FIG. 1, an electronic whiteboard system 10 includes a data processing equipment 100 and a plurality of client-end equipment 210_1 to 210_N, wherein N is a positive integer. The data processing equipment 100 is coupled to the client-end equipment 210_1 to 210_N. In the present embodiment, the client-end equipment 210_1 to 210_N communicate with the data processing equipment 100 via a network to transmit information. The data processing equipment 100 may be provided in a company providing services. The data processing equipment 100 is, for example, a cloud server, and is configured to provide a cloud electronic whiteboard function to be displayed on the client-end equipment 210_1 to 210_N. The so-called cloud electronic whiteboard means that a client may display the screen like a physical electronic whiteboard and a related application tool (such as a brush, a color, etc.) in the displays of the client-end equipment 210_1 to 210_N via a web application, and the client may draw, move an object, or share a file and the like on the screen of the cloud electronic whiteboard in the display. It is similar to a plurality of clients editing collaboratively on one common virtual electronic whiteboard, and the plurality of clients may view the same screen of the cloud electronic whiteboard via the displays of the client-end equipment 210_1 to 210_N.

In the present embodiment, the client-end equipment 210_1 to 210_N may be operated by a plurality of clients respectively. The client-end equipment 210_1 to 210_N are, for example, electronic whiteboards having networking function. The client-end equipment 210_1 to 210_N have a processor and a storage device, so that a web application is stored in the storage device, and the processors of the client-end equipment 210_1 to 210_N may execute the web application. That is, a plurality of clients may respectively execute, for example, a web application on the client-end equipment 210_1 to 210_N, so as to perform a related editing operation on the cloud electronic whiteboard. The data processing equipment 100 may be used as a collaboration hub connected to a plurality of electronic whiteboards, in order to collect a plurality of editing information provided by a plurality of clients performing collaborative editing of the cloud electronic whiteboard on the client-end equipment 210_1 to 210_N respectively. The data processing equipment 100 may process these editing information, so that the web application programs respectively executed by the client-end equipment 210_1 to 210_N may display the collaborative editing result of the cloud electronic whiteboard.

In the present embodiment, the client-end equipment 210_1 to 210_N have a processor and a storage device, and the processor is coupled to the storage device. The data processing equipment 100 includes a processor 110 and a storage device 120. The processor 110 is coupled to the storage device 120. The processors and storage devices of the client-end equipment 210_1 to 210_N and the data processing equipment 100 may adopt the same devices, for example, as described below. The processor 110 may include a central processing unit (CPU) having an image data processing function, or other programmable general-purpose or special-purpose microprocessors, image processing units (IPUs), graphics processing units (GPUs), digital signal processors (DSPs), application-specific integrated circuits (ASICs), programmable logic devices (PLDs), other similar arithmetic circuits, or a combination of these circuits. The storage device 120 may include, for example, a non-volatile memory. The storage device 120 may store a program and an algorithm of a situation management module 121 and the related electronic whiteboard system for the processor 110 to read and execute, so as to implement a related operation, process, and function of the cloud electronic whiteboard of the invention.

In the present embodiment, the data processing equipment 100 may further include a communication interface (not shown), and the data processing equipment 100 may be connected to the Internet or other network systems, for example, via the communication interface. The client-end equipment 210_1 to 210_N may be, for example, electronic whiteboards, personal computers, tablet computers, smart phones, or similar electronic equipment having networking function, respectively, and may also include, for example, processors, storage devices, and communication interfaces. The communication interface is an interface connected to a network, such as a circuit or device connected to the network by WiFi or cable. The processors and storage devices of the client-end equipment 210_1 to 210_N and the data processing equipment 100 may adopt the same devices. The client-end equipment 210_1 to 210_N are respectively connected to the data processing equipment 100 via the communication interface and the Internet, so as to transmit and receive editing information of the related cloud electronic whiteboard and display the editing result of the cloud electronic whiteboard. In the present embodiment, a plurality of clients may operate the client-end equipment 210_1 to 210_N in different regions, adjacent regions, the same time zone, or different time zones, for example.

In the present embodiment, the electronic whiteboard system 10 may be applied in various operation situations of the cloud electronic whiteboard such as a teaching situation, a speech situation, or a group discussion situation. The first client (for example, the client-end equipment 210_1) to create a cloud electronic whiteboard on the client device may select an operation situation, and the client corresponding to this created cloud electronic whiteboard has a higher authority than other clients who later join the cloud electronic whiteboard, and has the right to change the authority of the other clients. A plurality of clients may operate the client-end equipment 210_1 to 210_N to edit the same or different objects in the cloud electronic whiteboard at the same time or at different times. The objects may be, for example, patterns, lines, characters, etc., which are not limited by the invention. The data processing equipment 100 may obtain the situation parameters of the current cloud electronic whiteboard operating situation from the situation management module 121 stored in the storage device 120 according to the operating situation of the cloud electronic whiteboard selected by the client (the client selects the operating situation when creating the cloud electronic whiteboard, so that the data processing equipment 100 obtains the corresponding situation parameters) to process the editing information provided by the client-end equipment 210_1 to 210_N. The situation parameters may be used, for example, to set page viewing and page editing permissions of different client roles (such as teachers, teaching assistants, and students) of the cloud electronic whiteboard, and the priority scores of different pages and different objects corresponding to different client roles.

In the present embodiment, when the plurality of clients edit the same or different objects in the cloud electronic whiteboard at the same time or adjacent time via at least a portion of the client-end equipment 210_1 to 210_N, the data processing equipment 100 receives a plurality of same or different first editing information provided by the plurality of client-end equipment 210_1 to 210_N displaying the cloud electronic whiteboard, and the electronic whiteboard system 10 may sort and group the first editing information provided by at least a portion of the client-end equipment 210_1 to 210_N according to the corresponding situation parameters to generate a plurality of pre-processing information, wherein the pre-processing information at least respectively correspond to one piece of the first editing information. The electronic whiteboard system 10 may sort and verify these pre-processing information according to the corresponding situation parameters, and select at least one of these verified pre-processing information to generate second editing information. The electronic whiteboard system 10 may execute the second editing information, and make the client-end equipment 210_1 to 210_N synchronously display the editing result of the cloud electronic whiteboard corresponding to the second editing information.

Moreover, the data processing equipment 100 and the client-end equipment 210_1 to 210_N may also perform data encoding of information and data decoding of information during the transmission process of the various information, so as to implement an effective information transmission operation, which is not limited in the invention.

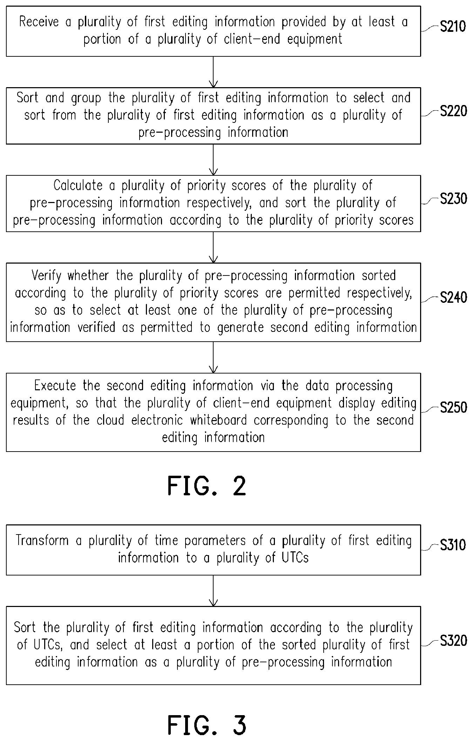

FIG. 2 is a flowchart of an operation method of an electronic whiteboard system of an embodiment of the invention. Referring to FIG. 1 and FIG. 2, the electronic whiteboard system 10 may perform the following steps S210 to S250 to effectively perform collaborative editing of a cloud electronic whiteboard. In the present embodiment, a plurality of clients may operate at least a portion of the client-end equipment 210_1 to 210_N to edit the cloud electronic whiteboard. In step S210, the data processing equipment 100 receives a plurality of first editing information provided by at least a portion of the client-end equipment 210_1 to 210_N. In the present embodiment, the plurality of first editing information may be, for example, requirements for operations on the cloud electronic whiteboard, and requirements for operations such as clicking to view or delete a page displayed on the cloud electronic whiteboard, or information required for editing, such as selecting, adjusting, moving, or deleting an object displayed on the cloud electronic whiteboard.

In step S220, the data processing equipment 100 sorts and groups these first edited information to select and sort from these first edited information as a plurality of pre-processing information. In the present embodiment, the data processing equipment 100 may select and sort at least a portion of the first editing information as the plurality of pre-processing information in sequence according to the time when these first editing information are received.

In step S230, the data processing equipment 100 respectively calculates a plurality of priority scores of these pre-processing information, and sorts these pre-processing information according to the priority scores. In the present embodiment, the data processing equipment 100 may read the corresponding situation parameters from the situation management module 121 of the storage device 120 according to the current cloud electronic whiteboard operation situation, and calculate the priority scores of these pre-processing information according to the corresponding situation parameters, so as to sort these pre-processing information again according to the priority scores. For example, for each of the pre-processing information in the plurality of pre-processing information, since the first editing information have the same time or the time difference is less than the preset time length, it is necessary to calculate which corresponding first edited information in each of the pre-processing information has a higher priority score and needs to be processed first according to the corresponding situation parameters. Referring to Table 1, the description is as follows. This is the editing operation and priority scores corresponding to a teaching situation. If two client roles are both teaching assistants, and the two clients respectively perform two operations in a similar period of time, the first client performs a page deletion operation on a page in the electronic whiteboard to generate first editing information, and the second client performs an object moving operation to delete an object in a page in the electronic whiteboard to generate another editing information. Therefore, the two clients operate within a similar time period, so the two correspondingly provided two first editing information are selected in step 220, and in step 230, the priority scores corresponding to the two first editing information in the pre-processing information need to be calculated and the two first editing information in the pre-processing information need to be sorted according to the priority scores to proceed to the next step. Taking the two clients as an example here, since the client roles are both teaching assistants, the operation authority of the two clients is the same, and the comparison benchmark is also the same. However, the priority score corresponding to the delete page operation performed by the first client is 59 points, and the priority score corresponding to the moving object operation performed by the second client is 15 points. Therefore, the two operations produce a sequence of operations of the first client prior to the sequence of operations of the second client for the next step of determination.

In step S240, the data processing equipment 100 respectively verifies whether these pre-processing information are permitted. Specifically, for example, since different clients are set to different roles (such as teacher, teaching assistant, and student), different roles have different page viewing rights and page editing rights at the cloud electronic whiteboard. Therefore, this step refers to confirming whether the clients corresponding to these pre-processing information have the operation authority or the operation is error-free. If it is determined not to have the corresponding operation authority, the corresponding pre-processing information needs to be ignored or discarded. Or in step S220, among the plurality of pre-processing information divided into the same group, whether there are conflicting operation information therein is determined (for example, deletion and editing may not occur simultaneously). This step is combined with the priority scores to select at least one piece of permitted pre-processing information and sort it according to the priority scores to generate the second editing information. In the present embodiment, the data processing equipment 100 may determine whether the client role providing these pre-processing information has permission to perform the corresponding editing operation according to the corresponding situation parameters. For example, if the operation of the first client generated in step S230 is prioritized over the operation of the second client, in step S240, it is determined that the operation of the first client is permitted, and then no matter whether the second client is authorized or not, the second editing information is generated based on the first editing information corresponding to the first client, and the first editing information of the second client is ignored, and the process proceeds to the next step S250.

In step S250, if the data processing equipment 100 generates one second editing information from the permitted pre-processing information sorted according to the priority scores in the previous step S240, then this step 250 executes the second editing information, so that the client-end equipment 210_1 to 210_N display the editing results of the cloud electronic whiteboard corresponding to the second editing information. If the second editing information generated from the permitted pre-processing information sorted according to the priority scores in the previous step S240 is a plurality (that is, a plurality of groups divided into the same group are included because the time when the data processing equipment 100 receives the first editing information is the same or similar, that is, including a plurality of different first editing information received at the same/similar time points), then in step S250, these second editing information are sequentially executed according to time order, so that the client-end equipment 210_1 to 210_N sequentially display the editing results of the cloud electronic whiteboard corresponding to the second editing information. In the present embodiment, the data processing equipment 100 may execute the second editing information and enable the client-end equipment 210_1 to 210_N to synchronously update the editing results of the cloud electronic whiteboard according to these second editing information respectively. The cloud electronic whiteboard screen displayed by the web application programs respectively executed by the client-end equipment 210_1 to 210_N may synchronously present the same editing result of the cloud electronic whiteboard.

FIG. 3 is a flowchart of sorting a plurality of first editing information of an embodiment of the invention. Referring to FIG. 1 to FIG. 3, steps S310 to S320 of the present embodiment are the detailed implementation flow of step S220 of the embodiment of FIG. 2. In step S310, the data processing equipment 100 may transform a plurality of time parameters of the plurality of first editing information into a plurality of Coordinated Universal Time (UTCs). In the present embodiment, since the client-end equipment 210_1 to 210_N may simultaneously edit the cloud electronic whiteboard in different time zones, the data processing equipment 100 may first standardize the time parameter format of these first editing information. In step S320, the data processing equipment 100 may then sort these first editing information according to these UTCs, and select at least a portion of these sorted first editing information as the plurality of pre-processing information. In the present embodiment, the data processing equipment 100 may perform batch grouping (that is, select at least a portion of the first editing information) on a portion of the first editing information having the same time or for which the time difference is less than a preset time length and divide the first editing information in similar periods into the same group, and the same group is one pre-processing information, thus generating or serving as the plurality of pre-processing information, so as to reduce the scope and processing time of comparison for subsequent determination of order of priority.

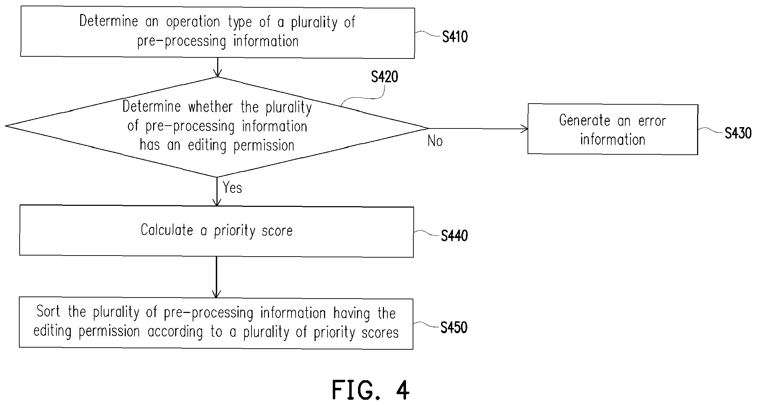

FIG. 4 is a flowchart of calculating a plurality of priority scores of a plurality of pre-processing information of an embodiment of the invention. Referring to FIG. 1, FIG. 2, and FIG. 4, steps S410 to S450 of the present embodiment are the detailed implementation flow of step S230 of the embodiment of FIG. 2. When the data processing equipment 100 completes the confirmation of the plurality of pre-processing information, in step S410, the data processing equipment 100 determines the operation type of these pre-processing information. The operation type may be, for example, operations on the cloud electronic whiteboard and operations such as clicking to view or delete a page displayed on the cloud electronic whiteboard, or an editing operation such as selecting, adjusting, moving, or deleting an object displayed on the cloud electronic whiteboard.

In step S420, the data processing equipment 100 may determine whether these pre-processing information have editing permission. In the present embodiment, the data processing equipment 100 may respectively determine whether these pre-processing information have editing permission according to the editing permission setting (for example, by looking up a table) corresponding to the current cloud electronic whiteboard operation situation. For example, taking a teaching situation as an example, if the client role is a teacher, the corresponding pre-processing information may have full permission. If the client role is a teaching assistant, the corresponding pre-processing information may have partial permission. For example, if the pre-processing information is an editing operation corresponding to modifying or moving an object, the pre-processing information may have permission. For example, if the pre-processing information is an editing operation corresponding to deleting an object, the pre-processing information may not have permission. If the client role is a student, the corresponding pre-processing information may all not have permission.

The data processing equipment 100 may perform permission determination on each of these pre-processing information. If a certain pre-processing information does not have editing permission, in step S430, the data processing equipment 100 may generate an error information and send the error information to the corresponding client-end equipment to notify the client that the current editing operation does not have editing permission. For example, if the client role is a student, and the student is to edit the object displayed on the cloud electronic whiteboard, the data processing equipment 100 notifies the student that they do not have editing permission.

Next, if at least one pre-processing information has editing permission, in step S440, the data processing equipment 100 may calculate a plurality of priority scores of the plurality of pre-processing information having editing permission, respectively. In step S450, the data processing equipment 100 may sort the plurality of pre-processing information having editing permission according to these priority scores. In the present embodiment, the data processing equipment 100 may, for example, perform a table lookup operation such as the following Table 1 according to the cloud electronic whiteboard operation situation, so as to obtain these priority scores of these pre-processing information. In addition, the data processing equipment 100 may sort these pre-processing information in sequence in a priority order from a highest priority score to a lowest priority score.

**Table 1**

| Editing object | Editing operation | Priority score |
|---|---|---|
| Electronic whiteboard | Delete electronic whiteboard | 99 |
| | Move electronic whiteboard | 95 |
| | Add electronic whiteboard | 93 |
| | View electronic whiteboard | 90 |
| Page | Delete page | 59 |
| | Move page | 55 |
| | Add page | 53 |
| | View page | 50 |
| Object | Delete object | 19 |
| | Move object | 15 |
| | Add object | 13 |
| | View object | 10 |

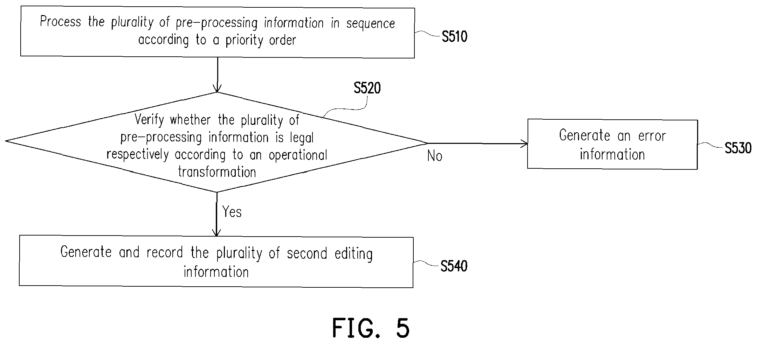

FIG. 5 is a flowchart of generating a plurality of second editing information of an embodiment of the invention. Referring to FIG. 1, FIG. 2, and FIG. 4, steps S510 to S540 of the present embodiment are the detailed implementation flow of step S240 of the embodiment of FIG. 2. In step S510, the data processing equipment 100 may process the plurality of pre-processing information in sequence according to the priority order. In the present embodiment, the higher the priority score, the higher the priority degree for the data processing equipment 100 to apply the corresponding editing operation to the cloud electronic whiteboard.

In step S520, the data processing equipment 100 may respectively verify whether these pre-processing information are permitted according to an operational transformation (OT). In the present embodiment, the OT is a preset collaborative processing program, and may be used to verify and transform an operation corresponding to these pre-processing information. If a certain pre-processing information fails the verification, in step S530, the data processing equipment 100 may generate an error information to be sent to the corresponding client-end equipment to inform the client that the current editing operation is not permitted. For example, if the client role is a teacher, and the teacher intends to perform an incorrect or unauthorized editing operation on the object displayed on the cloud electronic whiteboard, the data processing equipment 100 notifies the teacher that the current editing operation is not permitted. Lastly, if at least one pre-processing information passes the verification, then in step S540, the data processing equipment 100 may generate and record second editing information according to at least one of the sorted and permitted pre-processing information. The second editing information may be stored in the storage device 120. After the data processing equipment 100 executes the second editing information, the data processing equipment 100 selects at least one other of these pre-processing information verified as permitted to generate another second editing information, and the data processing equipment 100 executes the other second editing information and makes the plurality of client-end equipment display the editing result of the cloud electronic whiteboard corresponding to the other second editing information, wherein the UTC sequence corresponding to the second editing information is earlier than the UTC sequence of the other second editing information.

Based on the above, the electronic whiteboard system and the operation method thereof of the invention may implement effective multi-person collaborative editing operation on the cloud electronic whiteboard, and the editing operations performed by different clients in the same or similar time interval may be sorted according to the priority degree, so as to achieve effective collaborative editing results. Moreover, the electronic whiteboard system and the operation method thereof of the invention may also correspondingly adjust the order of the priority degree and permission setting of different editing operations for different cloud electronic whiteboard operation situations. Therefore, the electronic whiteboard system and the operation method thereof of the invention may implement effective and multi-person collaborative cloud whiteboard editing function with good client experience.

The above contents are only preferred embodiments of the invention, and the implementation scope of the invention should not be limited thereby. That is, all simple equivalent changes and modifications made according to the claims of the invention and the content of the specification still fall within the scope covered by the patent of the invention. In addition, any embodiment or claim of the invention need not achieve all the objects or advantages or features disclosed in the invention. In addition, the abstract and the title are only used to assist in the search of patent documents, and are not used to limit the claims of the invention. Moreover, terms such as "first" and "second" mentioned in the present specification or claims are only used to name elements or to distinguish different embodiments or ranges, and are not used to limit the upper limit or the lower limit on the number of elements.

## Claims

1. An electronic whiteboard system, wherein electronic whiteboard system comprises:
a data processing equipment (100) coupled to a plurality of client-end equipment (210), and the plurality of client-end equipment (210) are configured to display a cloud electronic whiteboard, wherein the data processing equipment (100) is configured to:
receiving a plurality of first editing information provided by the plurality of client-end equipment (210), and the data processing equipment (100) is configured to sort and group the plurality of first editing information to select and sort from the plurality of first editing information as a plurality of pre-processing information,
wherein the data processing equipment (100) is configured to calculate a plurality of priority scores of the plurality of pre-processing information respectively, and the data processing equipment (100) is configured to sort the plurality of pre-processing information according to the plurality of priority scores,
wherein the data processing equipment (100) is configured to respectively verify whether the plurality of pre-processing information sorted according to the plurality of priority scores are permitted to select at least one of the plurality of pre-processing information verified as permitted to generate second editing information, and the data processing equipment (100) is configured to execute the second editing information, so that the plurality of client-end equipment (210) display editing results of the cloud electronic whiteboard corresponding to the second editing information.

2. The electronic whiteboard system of claim 1, wherein the data processing equipment (100) is configured to transform a plurality of time parameters of the plurality of first editing information into a plurality of Coordinated Universal Times (UTCs), and the data processing equipment (100) is configured to sort the plurality of first editing information according to the plurality of UTCs and to select at least a portion of the sorted plurality of first editing information as the plurality of pre-processing information.

3. The electronic whiteboard system of claim 2, wherein the data processing equipment (100) is configured to select the at least a portion of the sorted plurality of first editing information as the plurality of pre-processing information according to a preset time interval.

4. The electronic whiteboard system of any one of the preceding claims, wherein the data processing equipment (100) is configured to determine an operation type of the plurality of pre-processing information, and to determine whether the plurality of pre-processing information have an editing permission respectively,
wherein the data processing equipment (100) is configured to sort the plurality of pre-processing information having the editing permission according to the plurality of priority scores.

5. The electronic whiteboard system of claim 4, wherein the data processing equipment (100) is configured to determine whether the plurality of pre-processing information have the editing permission respectively according to an editing permission setting corresponding to an operation situation of the cloud electronic whiteboard.

6. The electronic whiteboard system of claim 4 or 5, wherein the data processing equipment (100) is configured to sort the plurality of pre-processing information in sequence in a priority order from a highest priority score to a lowest priority score.

7. The electronic whiteboard system of any one of the preceding claims, wherein the data processing equipment (100) is configured to look up a table according to an operation situation of the cloud electronic whiteboard, so as to obtain the plurality of priority scores of the plurality of pre-processing information.

8. The electronic whiteboard system of any one of the preceding claims, wherein the data processing equipment (100) is configured to sequentially process the plurality of pre-processing information according to a priority order, and to respectively verify whether the plurality of pre-processing information are permitted according to an operational transformation.

9. The electronic whiteboard system of any one of the preceding claims, wherein the data processing equipment (100) is configured to record the second editing information.

10. The electronic whiteboard system of any one of the preceding claims, wherein after the data processing equipment (100) executes the second editing information, the data processing equipment (100) is configured to select at least another of the plurality of pre-processing information verified as permitted to generate another second editing information, and the data processing equipment (100) is configured to execute the other second editing information, so that the plurality of client-end equipment display editing results of the cloud electronic whiteboard corresponding to the other second editing information, wherein an UTC sequence of the second editing information is earlier than an UTC sequence of the other second editing information.

11. An operation method of an electronic whiteboard system, wherein the electronic whiteboard system (100) displays a cloud electronic whiteboard via a plurality of client-end equipment (210), and the operation method comprises the following steps:
Receiving a plurality of first editing information provided by at least a portion of the plurality of client-end equipment (210);
sorting and grouping the plurality of first editing information to select and sort from the plurality of first editing information as a plurality of pre-processing information;
calculating a plurality of priority scores of the plurality of pre-processing information respectively, and sorting the plurality of pre-processing information according to the plurality of priority scores;
verifying whether the plurality of pre-processing information sorted according to the plurality of priority scores are permitted respectively, so as to select at least one of the plurality of pre-processing information verified as permitted to generate second editing information; and
executing the second editing information, so that the plurality of client-end equipment (210) display editing results of the cloud electronic whiteboard corresponding to the second editing information.

12. The operation method of claim 11, wherein the step of sorting and grouping the plurality of first editing information comprises the following steps:
transforming a plurality of time parameters of the plurality of first editing information into a plurality of UTCs; and
sorting the plurality of first editing information according to the plurality of UTCs, and selecting at least a portion of the sorted plurality of first editing information as the plurality of pre-processing information, preferably the step of selecting the at least a portion of the sorted plurality of first editing information as the plurality of pre-processing information comprises:
selecting the at least a portion of the sorted plurality of first editing information as the plurality of pre-processing information according to a preset time interval.

13. The operation method of claim 11 or 12, wherein the step of sorting the plurality of pre-processing information according to the plurality of priority scores comprises the following steps:
determining an operation type of the plurality of pre-processing information;
determining whether the plurality of pre-processing information have an editing permission, respectively; and
sorting the plurality of pre-processing information having the editing permission according to the plurality of priority scores, preferably the step of determining whether the plurality of pre-processing information have the editing permission comprises:
determining whether the plurality of pre-processing information have the editing permission respectively according to an editing permission setting corresponding to an operation situation of the cloud electronic whiteboard.

14. The operation method of claim 13, wherein the plurality of pre-processing information are sorted in sequence in a priority order from a highest priority score to a lowest priority score.

15. The operation method of claim 11, wherein the step of calculating the plurality of priority scores of the plurality of pre-processing information respectively comprises:
looking up a table according to an operation situation of the cloud electronic whiteboard to obtain the plurality of priority scores of the plurality of pre-processing information.
